# EUROPEAN PATENT APPLICATION

(11) **EP 4 851 602 A1**
(43) Date of publication of application: **09.12.2026**
(21) Application number: 25880928.4
(22) Date of filing: 29.09.2025
(51) Int. Cl.: G01N 9/26

(54) **PARALLEL GAS DENSITY RELAY**

(30) Priority: 09.04.2025 CN 202510436652
(71) Applicant: Lanso Konly (Shanghai) Instruments Co., Ltd., Shanghai 201108 (CN)
(72) Inventor: SUN, Rui, Shanghai 201108 (CN); ZHAO, Dan, Shanghai 201108 (CN); HUANG, Yuegang, Shanghai 201108 (CN)
(74) Representative: Canzler & Bergmeier Patentanwälte Partnerschaft mbB
(86) International application number: PCT/CN2025/125435
(87) International publication number: WO 2026/214063

(57) **Abstract**

The present disclosure provides a parallel-type gas density relay for monitoring the pressure of a gas to be measured. One end of a measuring bellows is open and communicates with the gas to be measured, so that the gas to be measured flows into a measuring chamber. The measuring bellows is connected with a compensating bellows in a staggered manner. A plurality of pneumatic modules are connected in parallel with each other, a plurality of pressure-bearing modules are connected in parallel with each other, and the pneumatic modules and the pressure-bearing modules are connected in parallel with each other. When the pressure range of the monitored gas to be measured is large, shells of the compensating bellows and shells of the second pressure-bearing bellows share the pressure load. When the compensating pressure is high, shells of the measuring bellows and shells of the first pressure-bearing bellows share the pressure load.

## Description

### FIELD OF TECHNOLOGY

The present disclosure relates to the technical field of electrical equipment condition monitoring, and more particularly to a parallel-type gas density relay.

### BACKGROUND

In power systems, a gas density relay serves as a critical device for monitoring and controlling the density of insulating gas (e.g., SF₆ gas) in power equipment such as circuit breakers. Since gas density directly affects insulation performance and arc-extinguishing capability of the equipment, the gas density relay plays a vital role in power systems. It can monitor gas density variations in real time, issue an alarm or trigger a protective operation when gas density becomes abnormal, thereby ensuring safe operation of power equipment.

As key equipment in power transmission and distribution networks, a circuit breaker may not only cause equipment damage but also lead to large-scale power outages in the event of a fault, resulting in substantial economic losses and social impacts. Therefore, ensuring long-term, stable and reliable operation of circuit breakers is an important task in power system maintenance and management.

To achieve this goal, continuous and close monitoring must be performed on various operating indicators of the circuit breaker to ensure compliance with relevant standards. Among these indicators, gas density is a crucial parameter reflecting the operating state of the circuit breaker, and variations thereof may indicate potential problems such as internal leakage and abnormal temperature inside the equipment.

Current gas density relays mainly adopt Bourdon-tube measurement or bellows-type measurement. Bourdon-tube type measurement, despite its long application history, is relatively limited in accuracy and sensitivity. Bellows type measurement features higher accuracy and sensitivity and is thus widely used in low-pressure measurement. As a pressure-sensitive element, a bellows can accurately convert pressure changes into mechanical displacement, and further realize electrical signal output through a transmission mechanism.

However, bellows type measurement also has inherent limitations. Due to the characteristics of bellows themselves, the measuring range is relatively small, typically not exceeding 0.3 MPa, so it is mainly applied to low-pressure occasions, restricting its use in high-pressure measurement fields.

### SUMMARY

The present disclosure provides a parallel-type gas density relay for solving the technical problems of small measurement range and limited application scope of conventional bellows type gas density relays.

The parallel-type gas density relay for monitoring a pressure of a gas to be measured provided by the present disclosure comprises a pneumatic mechanism, a driving mechanism, and an indicating mechanism.

The pneumatic mechanism comprises one or more pneumatic modules and one or more pressure-bearing modules. Each of the pneumatic modules is connected in parallel with each of the pressure-bearing modules, the pressure-bearing modules are connected in parallel with each other, and the pneumatic modules are connected in parallel with each other. Each of the pneumatic modules comprises a measuring bellows with an open bottom end and a compensating bellows hermetically sealed at both ends. A sealed chamber is disposed inside the compensating bellows, and the sealed chamber is filled with a compensating gas having the same characteristics as the gas to be measured. A measuring chamber is disposed inside the measuring bellows, the bottom end of the measuring bellows is in communication with the gas to be measured so that the gas to be measured flows into the measuring chamber, and the measuring bellows is connected with the compensating bellows in a staggered manner. Each of the pressure-bearing modules comprises a first pressure-bearing bellows hermetically sealed at both ends and a second pressure-bearing bellows hermetically sealed at both ends. The first pressure-bearing bellows is connected with the second pressure-bearing bellows in a staggered manner, the first pressure-bearing bellows is connected in parallel with the measuring bellows, and the second pressure-bearing bellows is connected in parallel with the compensating bellows.

The driving mechanism comprises a connecting assembly and a driving assembly disposed on the connecting assembly. The measuring bellows is connected with the compensating bellows in a staggered manner through the connecting assembly, and the first pressure-bearing bellows is connected with the second pressure-bearing bellows in a staggered manner through the connecting assembly.

The indicating mechanism is connected with the driving assembly. When pressure of the gas to be measured changes, the measuring bellows and the first pressure-bearing bellows deform and drive the driving assembly to move through the connecting assembly, so as to push the indicating mechanism to rotate and indicate a gas pressure value.

In an embodiment, the indicating mechanism comprises a movement assembly rotatably mounted and an indicating assembly rotatably connected to the movement assembly. The movement assembly is disposed above the driving assembly and contacts a top of the driving assembly. The indicating assembly comprises a pointer and a dial disposed between the movement assembly and the pointer, and the pointer is rotatably connected to the movement assembly.

In an embodiment, the parallel-type gas density relay further comprises a pressure signal acquisition module disposed in the measuring chamber of one of the measuring bellows to acquire a pressure signal of the gas to be measured.

In an embodiment, the parallel-type gas density relay further comprises a circuit board electrically connected to the pressure signal acquisition module to transmit the pressure signal acquired by the pressure signal acquisition module to an external device.

In an embodiment, the connecting assembly comprises a first connecting plate, a second connecting plate disposed in parallel with the first connecting plate, and a support tube connecting the first connecting plate and the second connecting plate. A bottom end of the compensating bellows is connected to the first connecting plate, a top end of the measuring bellows is connected to the second connecting plate, a top end of the first pressure-bearing bellows is connected to the second connecting plate, and a bottom end of the second pressure-bearing bellows is connected to the first connecting plate. The first connecting plate is disposed higher than bottom ends of the measuring bellows and the first pressure-bearing bellows, and the second connecting plate is disposed lower than top ends of the compensating bellows and the second pressure-bearing bellows, so that the measuring bellows and the compensating bellows are staggered in a height direction, and the first pressure-bearing bellows and the second pressure-bearing bellows are staggered in the height direction.

In an embodiment, the parallel-type gas density relay further comprises a housing structure including a housing, an upper cover disposed on a top of the housing, and a lower cover disposed at a bottom of the housing. The pneumatic mechanism and the connecting assembly are both disposed in an accommodating cavity jointly defined by the housing, the upper cover and the lower cover. A gas nozzle for being in fluid communication with the gas to be measured is disposed at a bottom of the lower cover. Bottom ends of the measuring bellows with openings in the pneumatic modules are respectively in communication with the gas nozzle, and bottom ends of the first pressure-bearing bellows in the pressure-bearing modules are respectively connected to the lower cover. Top ends of the compensating bellows in the pneumatic modules are respectively fixedly connected to the upper cover, and top ends of the second pressure-bearing bellows in the pressure-bearing modules are respectively fixedly connected to the upper cover, so that the pneumatic modules are connected in parallel with each other, the pressure-bearing modules are connected in parallel with the pneumatic modules, and the pressure-bearing modules are connected in parallel with each other.

In an embodiment, the driving assembly comprises a linear driving rod and a slider. A first end of the linear driving rod is connected to the connecting assembly, and a second end of the linear driving rod is connected to the slider. The movement assembly is disposed above the slider and contacts a top of the slider.

In an embodiment, a first through hole is formed in the upper cover. The first end of the linear driving rod passes through the first through hole and is connected to the connecting assembly, and is movable up and down in the first through hole. The second end of the linear driving rod is connected to the slider.

In an embodiment, the parallel-type gas density relay further comprises an alarm mechanism disposed below the slider and located on a moving path of the slider; when pressure of the gas to be measured changes, the measuring bellows and the first pressure-bearing bellows deform and drive the slider to move toward or away from the alarm mechanism through the connecting assembly.

In an embodiment, the driving mechanism further comprises a triggering assembly for triggering the alarm mechanism, the triggering assembly being disposed on the driving assembly. The driving assembly can drive the triggering assembly to move so as to trigger the alarm mechanism to actuate.

As described above, the parallel-type gas density relay of the present disclosure has the following beneficial effects: The bottom end of the measuring bellows is open and is in fluid communication with the gas to be measured, allowing the gas to be measured to flow into the measuring chamber. When pressure of the gas to be measured changes, the measuring bellows and the first pressure-bearing bellows deform, drive the connecting assembly to move up and down, and drive the indicating mechanism to rotate and indicate a gas pressure value through the driving assembly. When the monitored pressure range of the gas to be measured is large, shells of the compensating bellows and shells of the second pressure-bearing bellows share the pressure load together, so that the compensating bellows and the second pressure-bearing bellows deform within effective strokes. When the compensating pressure is high, shells of the measuring bellows and shells of the first pressure-bearing bellows share the pressure load together, so that the measuring bellows and the first pressure-bearing bellows deform within effective strokes. Accordingly, the measurement range of the parallel-type gas density relay is expanded to meet gas pressure measurement requirements in a wider range. Meanwhile, each of the pneumatic modules and each of the pressure-bearing modules still adopt a high-precision bellows structure, ensuring high-precision measurement within a wide measurement range. In addition, when pressure of the gas to be measured changes due to variation of external ambient temperature, since the sealed chamber is filled with a compensating gas having the same characteristics as the gas to be measured, the sealed chamber and the measuring chamber are subjected to the same gas pressure, and deformations of the compensating bellows and the measuring bellows offset each other, avoiding indication errors caused by ambient temperature variations, ensuring that measurement results are free from temperature interference, and enabling the parallel-type gas density relay to maintain stable measurement performance in environments with large temperature fluctuations.

### BRIEF DESCRIPTION OF THE DRAWINGS

FIG. 1 is a schematic diagram showing an overall structure of a parallel-type gas density relay according to the present disclosure.
FIG. 2 is a schematic diagram showing a working principle of a pneumatic mechanism in the parallel-type gas density relay according to the present disclosure.
FIG. 3 is a schematic perspective view of the parallel-type gas density relay according to the present disclosure.
FIG. 4 is a schematic structural diagram of the parallel-type gas density relay according to the present disclosure in a remote transmission mode.
FIG. 5 is a schematic diagram showing staggered connection of bellows in the parallel-type gas density relay according to the present disclosure.
FIG. 6 is a sectional view of the parallel-type gas density relay according to the present disclosure.
FIG. 7 is a schematic partial structural diagram of the parallel-type gas density relay according to the present disclosure.
FIG. 8 is another schematic partial structural diagram of the parallel-type gas density relay according to the present disclosure.

### REFERENCE NUMERALS

1 Pneumatic mechanism
11 Pneumatic module
111 Measuring bellows
112 Compensating bellows
12 Pressure-bearing module
121 First pressure-bearing bellows
122 Second pressure-bearing bellows
2 Driving mechanism
21 Connecting assembly
211 First connecting plate
212 Second connecting plate
213 Support tube
22 Driving assembly
221 Linear driving rod
222 Slider
2221 Adjustment through hole
3 Indicating mechanism
31 Movement assembly
311 Movement support plate
312 Movement shaft
3121 Movement pin
3122 Movement push rod
313 Gear mechanism
32 Indicating assembly
321 Pointer
322 Dial
4 Pressure signal acquisition module
5 Circuit board
6 Housing structure
61 Housing
62 Upper cover
63 Lower cover
631 Gas nozzle
7 Alarm mechanism
8 Host computer
9 Signal transmission line

### DETAILED DESCRIPTION

The embodiments of the present disclosure are described below by way of specific examples, from which those skilled in the art can readily appreciate other advantages and effects of the present disclosure based on the disclosure of this specification.

It should be understood that the structures, proportions, sizes, and the like illustrated in the accompanying drawings are provided only for use in conjunction with the contents disclosed in the specification, so as to enable those skilled in the art to understand and read the present disclosure, and are not intended to limit the conditions under which the present disclosure may be practiced. Accordingly, any modifications of structure, changes in proportional relationships, or adjustments in size, which do not affect the effects achievable by the present disclosure or the objectives to be accomplished thereby, shall still fall within the scope of the technical content disclosed herein. The following detailed description should not be considered limiting, and the scope of the embodiments of the present disclosure is defined only by the claims of the issued patent. The terms used herein are for the purpose of describing particular embodiments only and are not intended to limit the present disclosure. Spatially relative terms, such as "upper," "lower," "left," "right," "below," "beneath," "under," "above," and "over," may be used herein for ease of description to describe one element or feature's relationship to another element or feature as illustrated in the figures.

In the present disclosure, unless otherwise expressly specified and limited, the terms "mounted," "connected," "coupled," "fixed," "secured," and the like are to be interpreted broadly. For example, they may refer to a fixed connection, a detachable connection, or an integral connection; may refer to a mechanical connection or an electrical connection; and may refer to a direct connection or an indirect connection via an intermediate medium, or internal communication between two elements. Those of ordinary skill in the art can understand the specific meanings of the above terms in the present disclosure according to specific circumstances.

Furthermore, as used herein, the singular forms "a," "an," and "the" are intended to include the plural forms as well, unless the context clearly indicates otherwise. It should be further understood that the terms "comprising," "including," and/or "having" specify the presence of stated features, operations, elements, components, items, and/or groups thereof, but do not preclude the presence or addition of one or more other features, operations, elements, components, items, and/or groups thereof. As used herein, the terms "or" and "and/or" are to be interpreted as inclusive, meaning any one or any combination. Thus, "A, B, or C" or "A, B, and/or C" means any of the following: A; B; C; A and B; A and C; B and C; or A, B, and C. Exceptions to this definition will occur only when a combination of elements, functions, or operations is inherently mutually exclusive.

In order to make the objectives, technical solutions, and advantages of the present disclosure more clearly understood, the technical solutions of the embodiments of the present disclosure are further described in detail below with reference to the accompanying drawings and the following embodiments. It should be understood that the specific embodiments described herein are for illustrative purposes only and are not intended to limit the present disclosure.

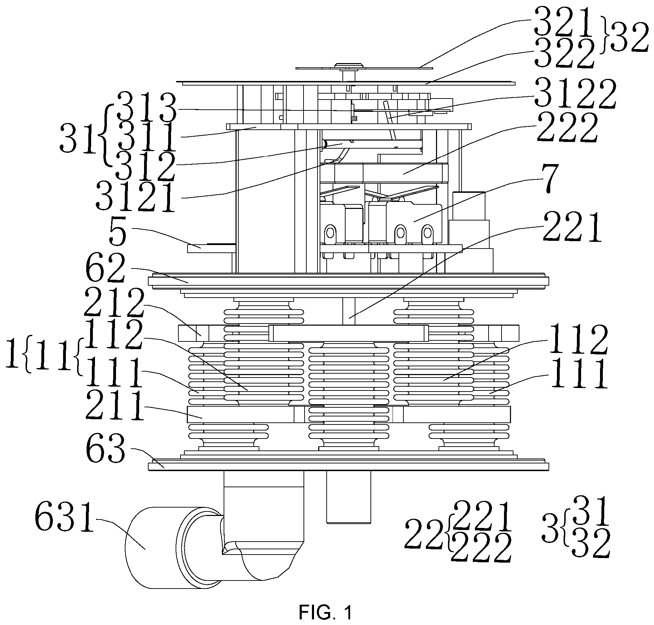

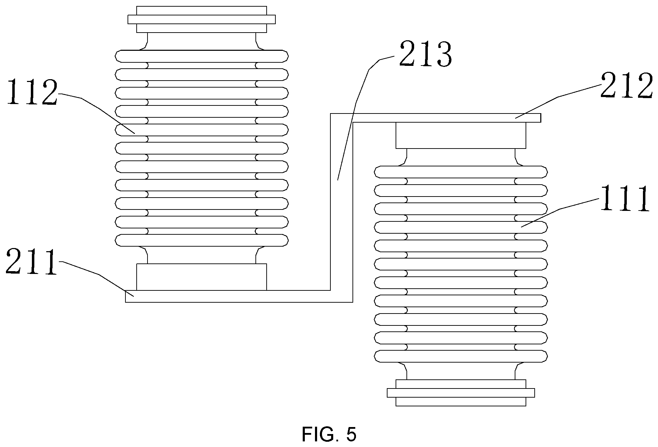

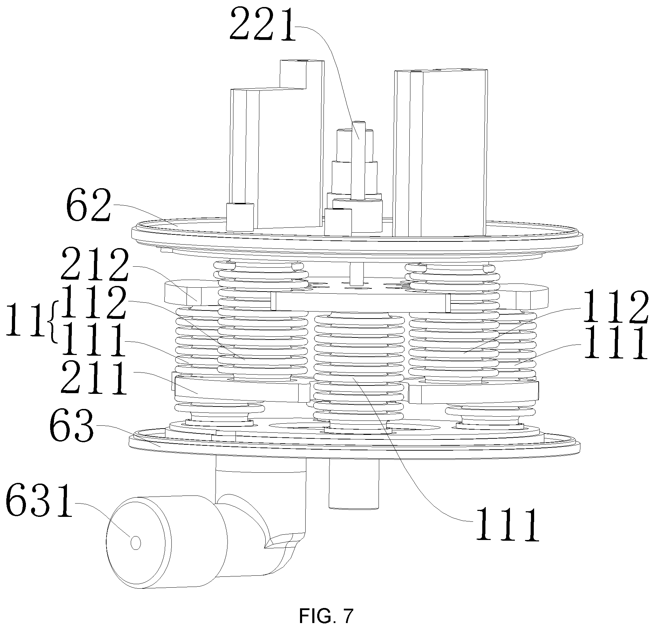

Please refer to FIG. 1 to FIG. 8. The present disclosure provides a parallel-type gas density relay for monitoring pressure of a gas to be measured, including a pneumatic mechanism 1, a driving mechanism 2 and an indicating mechanism 3.

The pneumatic mechanism 1 includes one or more pneumatic modules 11 and one or more pressure-bearing modules 12. The pneumatic modules 11 are connected in parallel with each other, the pressure-bearing modules 12 are connected in parallel with each other, and each of the pneumatic modules 11 is connected in parallel with each of the pressure-bearing modules 12. Each of the pneumatic modules 11 includes a measuring bellows 111 with an open bottom end and a compensating bellows 112 hermetically sealed at both ends. A sealed chamber is disposed inside the compensating bellows 112, and the sealed chamber is filled with a compensating gas having the same characteristics as the gas to be measured. A measuring chamber is disposed inside the measuring bellows 111, and the bottom end of the measuring bellows 111 is in communication with the gas to be measured so that the gas to be measured flows into the measuring chamber. The measuring bellows 111 is connected with the compensating bellows 112 in a staggered manner. Each of the pressure-bearing modules 12 includes a first pressure-bearing bellows 121 hermetically sealed at both ends and a second pressure-bearing bellows 122 hermetically sealed at both ends. The first pressure-bearing bellows 121 is connected with the second pressure-bearing bellows 122 in a staggered manner. The first pressure-bearing bellows 121 is connected in parallel with the measuring bellows 111, and the second pressure-bearing bellows 122 is connected in parallel with the compensating bellows 112.

The driving mechanism 2 includes a connecting assembly 21 and a driving assembly 22 disposed on the connecting assembly 21. The measuring bellows 111 is connected with the compensating bellows 112 in a staggered manner through the connecting assembly 21. The first pressure-bearing bellows 121 is connected with the second pressure-bearing bellows 122 in a staggered manner through the connecting assembly 21.

The indicating mechanism 3 is connected with the driving assembly 22. When pressure of the gas to be measured changes, the measuring bellows 111 and the first pressure-bearing bellows 121 deform and drive the driving assembly 22 to move through the connecting assembly 21, so as to push the indicating mechanism 3 to rotate and indicate a gas pressure value.

In the parallel-type gas density relay of the present disclosure, the bottom end of the measuring bellows 111 is open and is in fluid communication with the gas to be measured, allowing the gas to be measured to flow into the measuring chamber. When pressure of the gas to be measured changes, the measuring bellows 111 and the first pressure-bearing bellows 121 deform, drive the connecting assembly 21 to move up and down, and drive the indicating mechanism 3 to rotate and indicate a gas pressure value through the driving assembly 22. When the monitored pressure range of the gas to be measured is large, shells of the compensating bellows 112 and shells of the second pressure-bearing bellows 122 share the pressure load together, so that the compensating bellows 112 and the second pressure-bearing bellows 122 deform within effective strokes. When the compensating pressure is high, shells of the measuring bellows 111 and shells of the first pressure-bearing bellows 121 share the pressure load together, so that the measuring bellows 111 and the first pressure-bearing bellows 121 deform within effective strokes. Accordingly, the measurement range of the parallel-type gas density relay is expanded to meet gas pressure measurement requirements in a wider range. Meanwhile, each of the pneumatic modules 11 and each of the pressure-bearing modules 12 still adopt a high-precision bellows structure, ensuring high-precision measurement within a wide measurement range. In addition, when pressure of the gas to be measured changes due to variation of external ambient temperature, since the sealed chamber is filled with a compensating gas having the same characteristics as the gas to be measured, the sealed chamber and the measuring chamber are subjected to the same gas pressure, and deformations of the compensating bellows 112 and the measuring bellows 111 offset each other, preventing indication errors caused by ambient temperature variations, ensuring that measurement results are free from temperature interference, and enabling the parallel-type gas density relay to maintain stable measurement performance in environments with large temperature fluctuations.

It should be noted that due to physical properties of bellows, a single pair of bellows in the prior art can bear an air pressure of about 0.3 MPa. When the measuring bellows is filled with an air pressure of 0.3 MPa, an effective stroke of the compensating bellows substantially reaches a maximum value. Similarly, when the compensating bellows is filled with compensating gas of 0.3 MPa, an effective stroke of the measuring bellows also substantially reaches a maximum value. Therefore, a gas density relay in the prior art has a small measurable gas pressure range, typically not exceeding 0.3 MPa, and is mainly applied to low-pressure occasions, restricting its application in high-pressure measurement fields.

The parallel-type gas density relay of the present disclosure adopts a parallel arrangement of bellows. When the monitored pressure range of the gas to be measured is large, pressure is shared so that the measuring bellows 111, the first pressure-bearing bellows 121, the compensating bellows 112 and the second pressure-bearing bellows 122 all deform within effective strokes, thereby expanding the measurement range of the parallel-type gas density relay and meeting gas pressure measurement requirements in a wider range.

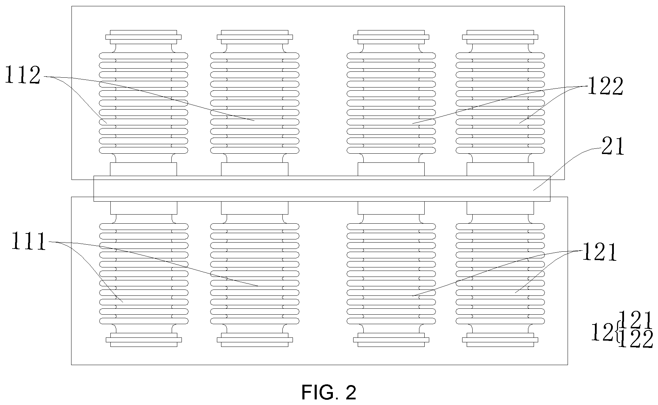

In the present disclosure, as exemplarily shown in FIG. 2, the pneumatic mechanism 1 includes two pneumatic modules 11 connected in parallel with each other and two pressure-bearing modules 12 connected in parallel with each other, and the pneumatic modules 11 and the pressure-bearing modules 12 are connected in parallel with each other. That is, two measuring bellows 111 connected in parallel with each other, two compensating bellows 112 connected in parallel with each other, two first pressure-bearing bellows 121 connected in parallel with each other and two second pressure-bearing bellows 122 connected in parallel with each other are adopted. The measuring bellows 111 are connected in parallel with the first pressure-bearing bellows 121, the compensating bellows 112 are connected in parallel with the second pressure-bearing bellows 122, the measuring bellows 111 are connected with the compensating bellows 112 in a staggered manner through the connecting assembly 21, and the first pressure-bearing bellows 121 are connected with the second pressure-bearing bellows 122 in a staggered manner through the connecting assembly 21. For better illustration of the working principle of the pneumatic mechanism 1, description is made with reference to the following specific applications:

Assuming that a compensating pressure is 0.4 MPa, and sealed chambers of the two compensating bellows 112 are each filled with compensating gas at 0.4 MPa. Before the two measuring bellows 111 are in communication with the gas to be measured, the following relationship is satisfied: compensating pressure × 2 = pressure borne by shells of the measuring bellows + pressure borne by shells of the first pressure-bearing bellows. Then each shell of the measuring bellows 111 and each shell of the first pressure-bearing bellows 121 bear a pressure of 0.2 MPa.
(1) When gas to be measured at 0.2 MPa is introduced into measuring chambers of the two measuring bellows 111, the following relationship is satisfied: compensating pressure × 2 = pressure of the gas to be measured × 2 + pressure borne by shells of the measuring bellows + pressure borne by shells of the first pressure-bearing bellows. Then each shell of the measuring bellows 111 and each shell of the first pressure-bearing bellows 121 bear a pressure of 0.1 MPa. Each measuring bellows 111 and each first pressure-bearing bellows 121 deform upward, drive the connecting assembly 21 to move upward, and drive the indicating mechanism 3 to rotate and indicate a gas pressure value through the driving assembly 22.
(2) When pressure of the gas to be measured drops, e.g., when gas pressure of the gas to be measured in the measuring chambers of the two measuring bellows 111 drops from 0.2 MPa to 0.1 MPa, each shell of the measuring bellows 111 and each shell of the first pressure-bearing bellows 121 bear a pressure of 0.15 MPa. Each measuring bellows 111 and each first pressure-bearing bellows 121 deform downward, drive the connecting assembly 21 to move downward, and drive the indicating mechanism 3 to rotate and indicate a gas pressure value through the driving assembly 22.
(3) When gas to be measured at 1 MPa is introduced into the measuring chambers of the two measuring bellows 111, the following relationship is satisfied: compensating pressure × 2 + pressure borne by shells of the compensating bellows + pressure borne by shells of the second pressure-bearing bellows = pressure of the gas to be measured × 2. Pressure borne by shells of the compensating bellows + pressure borne by shells of the second pressure-bearing bellows = pressure of the gas to be measured × 2 - compensating pressure × 2 = 2 MPa - 0.8 MPa = 1.2 MPa. Then each shell of the compensating bellows 112 and each shell of the second pressure-bearing bellows 122 bear a pressure of 0.3 MPa. Each measuring bellows 111 and each first pressure-bearing bellows 121 deform upward, drive the connecting assembly 21 to move upward, and drive the indicating mechanism 3 to rotate and indicate a gas pressure value through the driving assembly 22.
(4) The sealed chamber of the compensating bellows 112 is filled with a compensating gas having the same characteristics as the gas to be measured. When gas pressure in the measuring chamber of the measuring bellows 111 is equal to gas pressure in the sealed chamber of the compensating bellows 112, the system is in a balanced state, and the indicating mechanism 3 indicates a current gas pressure value. When external ambient temperature variations, due to the same gas characteristics, gas volume and pressure in both the measuring chamber and the sealed chamber change equally, and acting forces generated by the measuring bellows 111 and the compensating bellows 112 are also equal. Balance of acting forces prevents relative displacement between the measuring bellows 111 and the compensating bellows 112, and the driving assembly 22 does not move, so that the indicating mechanism 3 remains stationary with an unchanged indication. In this way, the compensating bellows 112 can automatically offset an influence of ambient temperature variations on measurement results. Regardless of temperature rise or fall, the compensating bellows 112 ensures that measurement results only reflect actual changes of gas pressure without being interfered by temperature, enabling the parallel-type gas density relay to maintain stable measurement performance in environments with large temperature fluctuations.

Furthermore, the pneumatic modules 11 are connected in parallel with each other, the pressure-bearing modules 12 are connected in parallel with each other, the pneumatic modules 11 are connected in parallel with the pressure-bearing modules 12, the measuring bellows 111 is connected with the compensating bellows 112 in a staggered manner through the connecting assembly 21, and the first pressure-bearing bellows 121 is connected with the second pressure-bearing bellows 122 in a staggered manner through the connecting assembly 21, so that the multiple measuring bellows 111, multiple compensating bellows 112, multiple first pressure-bearing bellows 121 and multiple second pressure-bearing bellows 122 can be disposed compactly to make full use of space. If the measurement range needs to be further expanded, only the number of bellows needs to be increased, providing high expandability.

In the present disclosure, a bellows pressure calculation formula is as follows:$P = kx / S ;$ Formula (1)
where P represents maximum pressure measurable by the bellows, S represents an effective area of the bellows, k represents axial stiffness per convolution of the bellows, and x represents maximum axial displacement per convolution of the bellows.

It should be noted that when a bellows is used for pressure measurement, its measurement range is determined by parameters such as the axial stiffness per convolution, the maximum axial displacement per convolution and the effective area. Based on calculations using values in common specifications of sensitive bellows in JB/T 6169, the P value is less than 0.4 MPa, so a measurement range of bellows density meters on the market is typically about 0.2-0.3 MPa with a narrow measurement range. The present disclosure increases total stiffness k by adopting a parallel arrangement of bellows. Total stiffness of the pneumatic mechanism 1 is: kₜₒₜₐₗ = n × k, where n is the number of parallel bellows. Increased total stiffness of the pneumatic mechanism 1 allows the pneumatic mechanism 1 to bear higher gas pressure, improves system stiffness and stability in a high-pressure environment, and reduces vibration under high pressure.

In the present disclosure, as an example, the pneumatic mechanism 1 includes two pneumatic modules 11 connected in parallel with each other and two pressure-bearing modules 12 connected in parallel with each other, and the pneumatic modules 11 and the pressure-bearing modules 12 are connected in parallel with each other. Each of the pneumatic modules 11 includes a measuring bellows 111 and a compensating bellows 112, and each of the pressure-bearing modules 12 includes a first pressure-bearing bellows 121 hermetically sealed at both ends and a second pressure-bearing bellows 122 hermetically sealed at both ends. The measurement range is cumulatively increased through parallel arrangement of bellows. At this time, overall stiffness of the pneumatic mechanism 1 is 4k. According to Formula (1), the P value can reach 1.6 MPa, thereby achieving an expected measurement range of more than 1 MPa, while maintaining the high-precision characteristic of the bellows itself and expanding the measurement range.

The present disclosure can adapt to all working conditions from low pressure to ultra-high pressure by adjusting the number of pneumatic modules 11. The measurement range can reach 0-5 MPa, while maintaining the advantage of high precision of the bellows itself and retaining the characteristic that gas compensation is superior to bimetallic strips, ensuring accuracy and reliability of measurement, thereby obtaining better precision and stability than conventional meters under a wide measurement range.

It should be noted that JB/T 6169 is a standard issued under the Chinese mechanical industry standards, with the full title *"Technical Conditions for Gas Density Relays"*. This standard specifies the technical requirements, test methods, inspection rules, as well as marking, packaging, transportation, and storage for gas density relays. It is applicable to relay devices used for monitoring gas density in industries such as electric power, chemical, petroleum, and natural gas.

In the present disclosure, as shown in FIG. 1, FIG. 3, FIG. 4 and FIG. 8, the indicating mechanism 3 includes a rotatable movement assembly 31 and an indicating assembly 32 rotatably connected to the movement assembly 31. The movement assembly 31 is disposed above the driving assembly 22 and contacts a top of the driving assembly 22. The indicating assembly 32 includes a pointer 321 and a dial 322 disposed between the movement assembly 31 and the pointer 321, and the pointer 321 is rotatably connected to the movement assembly 31.

In the present disclosure, as shown in FIG. 1, the movement assembly 31 includes a movement support plate 311, a movement shaft 312 rotatably disposed on one side of the movement support plate 311, a gear mechanism 313 disposed on the other side of the movement support plate 311, and a pointer rotating shaft connected to the gear mechanism 313. A movement pin 3121 and a movement push rod 3122 are disposed on the movement shaft 312. A hairspring is disposed on the gear mechanism 313. A second through hole is formed in the movement support plate 311. The movement push rod 3122 passes through the second through hole to contact the gear mechanism 313, and the movement pin 3121 contacts a top of the driving assembly 22. The pointer 321 is connected to the pointer rotating shaft. The hairspring is configured to provide a pre-tightening force. When the driving assembly 22 moves up and down, the movement pin 3121 is always kept in contact with the top of the driving assembly 22, and the movement push rod 3122 is always kept in contact with the gear mechanism 313. When pressure of the gas to be measured changes, the measuring bellows 111 and the first pressure-bearing bellows 121 deform and drive the driving assembly 22 to move up and down through the connecting assembly 21. Under an elastic force of the hairspring, the movement pin 3121 is always in contact with the top of the driving assembly 22 and the movement push rod 3122 is always in contact with the gear mechanism 313. When the driving assembly 22 moves up and down, the driving assembly 22 pushes the movement pin 3121 to drive the movement shaft 312 to rotate, and pushes the gear mechanism 313 to rotate through the movement push rod 3122, so as to drive the pointer 321, through the pointer rotating shaft, to rotate around a connection point with the pointer rotating shaft. After rotation, the pointer 321 aligns with a scale marked on the dial 322, which is a gas pressure value of the gas to be measured.

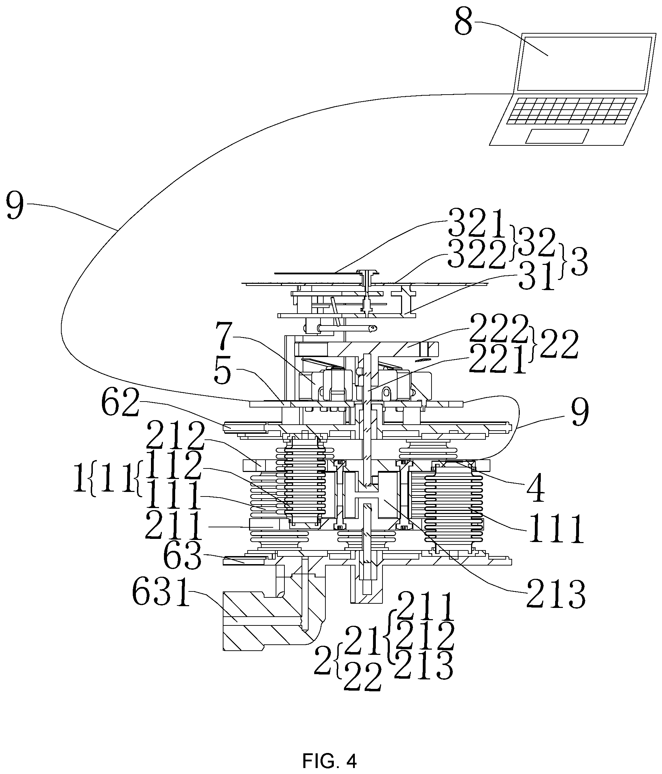

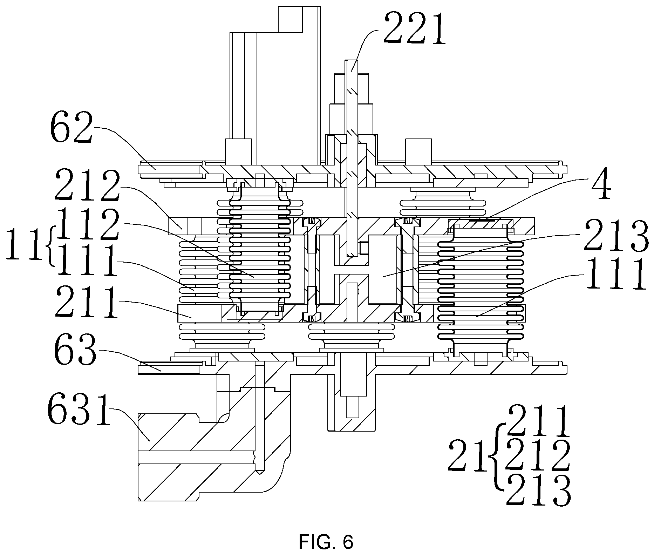

In the present disclosure, as shown in FIG. 4 and FIG. 6, the parallel-type gas density relay further includes a pressure signal acquisition module 4 disposed in the measuring chamber of one of the measuring bellows to acquire a pressure signal of the gas to be measured. Since open ends of the measuring bellows 111 all are in fluid communication with the gas to be measured, and the gas to be measured can flow freely in the measuring chambers, pressure in each measuring chamber of the measuring bellows 111 is the same. Therefore, pressure signal of the gas to be measured can be collected only by disposing the pressure signal acquisition module 4 in one measuring chamber, reducing the number of pressure signal acquisition modules 4 used and simplifying system design and cost.

In the present disclosure, as shown in FIG. 1 to FIG. 7, the open end of each measuring bellows 111 is connected to an external air chamber filled with the gas to be measured. According to the pressure transmission principle: in a fluid (gas or liquid), pressure is transmitted uniformly. If pressure of the external air chamber is 1 MPa, the pressure uniformly acts on all parts of the external air chamber, including the measuring bellows 111 connected to the external air chamber. Therefore, gas pressure inside each measuring chamber is 1 MPa. The measuring bellows 111 are connected in parallel to the same external air chamber and simultaneously subjected to the same gas pressure. Pressure is not shared (i.e., not changed to 0.5 MPa for each) due to multiple measuring bellows 111; instead, each measuring bellows 111 is independently subjected to gas pressure of 1 MPa. Gas pressure is an intensive quantity (independent of area) rather than an extensive quantity (such as force). Therefore, gas pressure is not shared due to connection of multiple measuring bellows, and each measuring bellows is subjected to the same pressure of 1 MPa.

In the present disclosure, the pressure signal acquisition module 4 includes a piezoresistive resistor or a pressure sensor. The piezoresistive resistor is an element whose resistance value changes with pressure and can convert a pressure signal into a resistance value change. The piezoresistive resistor is installed in the measuring chamber. When the gas to be measured flows into the measuring chamber, gas pressure acts on the piezoresistive resistor, and a resistance value of the piezoresistive resistor changes with gas pressure variation. Pressure of the gas to be measured can be indirectly calculated by measuring the resistance value change.

In the present disclosure, the pressure sensor is a device that directly converts a pressure signal into an electrical signal and has characteristics of high precision and fast response. When the gas to be measured flows into the measuring chamber, gas pressure acts on the pressure sensor, and the pressure sensor outputs an electrical signal proportional to the pressure, facilitating subsequent signal processing and data collection.

In the present disclosure, as shown in FIG. 1, FIG. 3, FIG. 4 and FIG. 8, the parallel-type gas density relay further includes a circuit board 5 electrically connected to the pressure signal acquisition module 4 to transmit the pressure signal acquired by the pressure signal acquisition module 4 to an external device. The circuit board 5 is electrically connected to the pressure signal acquisition module 4 through a signal transmission line 9. The circuit board 5 calculates a resistance value of the piezoresistive resistor to obtain pressure of the gas to be measured and outputs the pressure. The circuit board 5 processes an electrical signal output by the pressure sensor to obtain pressure of the gas to be measured and outputs the pressure.

In the present disclosure, as shown in FIG. 4, the circuit board 5 is electrically connected to a host computer 8 through the signal transmission line 9, or the circuit board 5 is communicatively connected to the host computer 8, so as to transmit pressure of the gas to be measured to the host computer 8 and realize remote transmission of pressure signals. The host computer 8 can determine whether the system has faults (such as gas leakage and abnormal pressure) by analyzing gas pressure variations, and an operator can remotely monitor gas pressure variations without being on site. Therefore, the parallel-type gas density relay of the present disclosure has a remote transmission function.

In the present disclosure, as shown in FIG. 1 to FIG. 7, the measuring bellows 111 and the compensating bellows 112 of each of the pneumatic modules 11 are each provided with an initial compression (pre-compression), meaning that both are in a partially contracted state without being subjected to an external force but do not reach a maximum contraction limit. The initial compression enables the measuring bellows 111 and the compensating bellows 112 to be in a pre-tightened state without being subjected to an external force. When pressure of the gas to be measured changes, even if the variation range is small, the measuring bellows 111 and the compensating bellows 112 can respond, broadening an application range of the parallel-type gas density relay and enabling stable measurement under more diversified working conditions.

It should be noted that the measuring bellows 111 and the compensating bellows 112 are each provided with an initial compression. When external pressure (especially negative pressure) changes, the measuring bellows 111 can respond to small variations because negative pressure usually varies slightly and has a narrow range (e.g., -0.1 MPa to 0 MPa). The measuring bellows 111 and the compensating bellows 112 are each provided with an initial compression, so that the measuring bellows 111 and the compensating bellows 112 maintain linear response within a working range, reducing nonlinear errors and improving system stability, shock resistance and impact resistance.

In the present disclosure, as shown in FIG. 1 to FIG. 7, the measuring bellows 111 can sense pressure variations of the gas to be measured, and the compensating bellows 112 can offset an influence of ambient temperature. The initial compression applied to both the measuring bellows 111 and the compensating bellows 112 can be realized by mechanical preloading. When the system is in a negative pressure state, external pressure is higher than internal pressure, and the measuring bellows 111 axially contracts. Due to the initial compression, the measuring bellows 111 is already in a pre-contracted state, so the measuring bellows 111 can immediately displace without overcoming its own elastic resistance, eliminating measurement hysteresis and ensuring that the system responds to negative pressure variations. The compensating bellows 112 is axially extended under contraction of the measuring bellows 111 and drives the driving assembly 22 to move through the connecting assembly 21, so as to push the movement assembly 31 to rotate and drive the indicating assembly 32 to indicate a gas pressure value in real time.

In the present disclosure, as shown in FIG. 1 to FIG. 7, the connecting assembly 21 includes a first connecting plate 211, a second connecting plate 212 disposed in parallel with the first connecting plate 211, and a support tube 213 connecting the first connecting plate 211 and the second connecting plate 212. A bottom end of the compensating bellows 112 is connected to the first connecting plate 211, a top end of the measuring bellows 111 is connected to the second connecting plate 212, a top end of the first pressure-bearing bellows 121 is connected to the second connecting plate 212, and a bottom end of the second pressure-bearing bellows 122 is connected to the first connecting plate 211. The first connecting plate 211 is disposed higher than bottom ends of the measuring bellows 111 and the first pressure-bearing bellows 121, and the second connecting plate 212 is disposed lower than top ends of the compensating bellows 112 and the second pressure-bearing bellows 122, so that the measuring bellows 111 and the compensating bellows 112 are staggered in a height direction, and the first pressure-bearing bellows 121 and the second pressure-bearing bellows 122 are staggered in the height direction.

In the present disclosure, as shown in FIG. 1 to FIG. 7, when pressure of the gas to be measured rises, the measuring bellows 111 and the first pressure-bearing bellows 121 deform upward, drive the connecting assembly 21 to move upward as a whole, and then drive the driving assembly 22 to move upward. The driving assembly 22 pushes the movement pin 3121 to drive the movement shaft 312 to rotate, and pushes the gear mechanism 313 to rotate through the movement push rod 3122, so as to drive the pointer 321 to rotate and indicate a gas pressure value through the pointer rotating shaft. When pressure of the gas to be measured drops, the measuring bellows 111 and the first pressure-bearing bellows 121 deform downward, drive the connecting assembly 21 to move downward as a whole, and then drive the driving assembly 22 to move downward. The driving assembly 22 pushes the movement pin 3121 to drive the movement shaft 312 to rotate, and pushes the gear mechanism 313 to rotate through the movement push rod 3122, so as to drive the pointer 321 to rotate and indicate a gas pressure value through the pointer rotating shaft.

In the present disclosure, as shown in FIG. 1, FIG. 3, FIG. 4 and FIG. 6 to FIG. 8, the parallel-type gas density relay further includes a housing structure 6 including a housing 61, an upper cover 62 disposed on a top of the housing 61, and a lower cover 63 disposed at a bottom of the housing 61. The pneumatic mechanism 1 and the connecting assembly 21 are both disposed in an accommodating cavity jointly defined by the housing 61, the upper cover 62 and the lower cover 63. A gas nozzle 631 for being in fluid communication with the gas to be measured is disposed at a bottom of the lower cover 63. Bottom ends of the measuring bellows 111 with openings in the pneumatic modules 11 are respectively in communication with the gas nozzle 631, and bottom ends of the first pressure-bearing bellows 121 in the pressure-bearing modules 12 are respectively connected to the lower cover 63. Top ends of the compensating bellows 112 in the pneumatic modules 11 are respectively fixedly connected to the upper cover 62, and top ends of the second pressure-bearing bellows 122 in the pressure-bearing modules 12 are respectively fixedly connected to the upper cover 62, so that the pneumatic modules 11 are connected in parallel with each other, the pressure-bearing modules 12 are connected in parallel with the pneumatic modules 11, and the pressure-bearing modules 12 are connected in parallel with each other.

In the present disclosure, an annular gas channel is disposed at a bottom of the lower cover 63. The annular gas channel extends all the way to the gas nozzle 631. Bottom ends of the measuring bellows 111 with openings in the pneumatic modules 11 are respectively in communication with the annular gas channel, so that the bottom ends of the measuring bellows 111 with openings are respectively in communication with the gas nozzle 631.

In the present disclosure, as shown in FIG. 1 to FIG. 7, bottom ends of the measuring bellows 111 in the pneumatic modules 11 are respectively in communication with the gas nozzle 631, and top ends thereof are respectively connected to the second connecting plate 212. Bottom ends of the first pressure-bearing bellows 121 in the pressure-bearing modules 12 are respectively connected to the lower cover 63, and top ends thereof are respectively connected to the second connecting plate 212. Bottom ends of the compensating bellows 112 in the pneumatic modules 11 are respectively connected to the first connecting plate 211, and top ends thereof are respectively fixedly connected to the upper cover 62. Bottom ends of the second pressure-bearing bellows 122 in the pressure-bearing modules 12 are connected to the first connecting plate 211, and top ends thereof are respectively fixedly connected to the upper cover 62. Parallel connection of the pneumatic modules 11 with each other, parallel connection of the pressure-bearing modules 12 with the pneumatic modules 11, and parallel connection of the pressure-bearing modules 12 with each other are realized. Accordingly, through parallel connection of the pneumatic modules 11 with each other, parallel connection of the pressure-bearing modules 12 with the pneumatic modules 11, and parallel connection of the pressure-bearing modules 12 with each other, when the monitored pressure range of the gas to be measured is large, shells of the compensating bellows 112 and shells of the second pressure-bearing bellows 122 jointly bear the pressure, so that the compensating bellows 112 and the second pressure-bearing bellows 122 deform within effective strokes. When the compensating pressure is high, shells of the measuring bellows 111 and shells of the first pressure-bearing bellows 121 jointly bear the pressure, thereby expanding the measurement range of the parallel-type gas density relay and enabling the relay to adapt to various measurement requirements.

In the present disclosure, a compensating gas charging port is disposed on the upper cover 62 to charge compensating gas into sealed chambers of the compensating bellows 112.

In the present disclosure, as shown in FIG. 1, FIG. 3 to FIG. 4 and FIG. 6 to FIG. 8, the driving assembly 22 includes a linear driving rod 221 and a slider 222. A first end of the linear driving rod 221 is connected to the connecting assembly 21, and a second end of the linear driving rod 221 is connected to the slider 222. The movement assembly 31 is disposed above the slider 222 and contacts a top of the slider 222. The movement pin 3121 is always in contact with the top of the slider 222. When pressure of the gas to be measured changes, the measuring bellows 111 and the first pressure-bearing bellows 121 deform and drive the linear driving rod 221 to move up and down through the connecting assembly 21, and drive the slider 222 to push the movement pin 3121 to drive the movement shaft 312 to rotate, and push the gear mechanism 313 to rotate through the movement push rod 3122, so as to drive the pointer 321 to rotate and indicate a gas pressure value through the pointer rotating shaft.

In the present disclosure, as shown in FIG. 1, FIG. 3 to FIG. 4 and FIG. 6 to FIG. 8, a first through hole is formed in the upper cover 62. The first end of the linear driving rod 221 passes through the first through hole and is connected to the connecting assembly 21, and is movable up and down in the first through hole, and the second end of the linear driving rod 221 is connected to the slider 222. The slider 222, the circuit board 5, the movement assembly 31 and the indicating assembly 32 are all located above the housing structure 6. When pressure of the gas to be measured changes, the measuring bellows 111 and the first pressure-bearing bellows 121 deform, the second connecting plate 212 drives the first connecting plate 211 to move up and down, and drives the slider 222 to move up and down through the linear driving rod 221, so that the slider 222 pushes the movement pin 3121 to drive the movement shaft 312 to rotate, and pushes the gear mechanism 313 to rotate through the movement push rod 3122, so as to drive the pointer 321 to rotate and indicate a gas pressure value through the pointer rotating shaft.

In the present disclosure, as shown in FIG. 1, FIG. 3 to FIG. 4 and FIG. 8, the parallel-type gas density relay further includes an alarm mechanism 7 disposed below the slider 222 and located on a moving path of the slider 222. When pressure of the gas to be measured changes, the measuring bellows 111 and the first pressure-bearing bellows 121 deform and drive the slider 222 to move toward or away from the alarm mechanism 7 through the connecting assembly 21.

In the present disclosure, as shown in FIG. 1, FIG. 3 to FIG. 4 and FIG. 8, the alarm mechanism 7 includes a plurality of micro switches. The micro switches are respectively disposed on the circuit board 5, and the circuit board 5 is disposed below the slider 222 and located on the moving path of the slider 222. The circuit board 5 is disposed on a top of the upper cover 62. When pressure of the gas to be measured rises, the measuring bellows 111 and the first pressure-bearing bellows 121 deform upward, the second connecting plate 212 drives the first connecting plate 211 to move upward as a whole, and drives the slider 222 to move upward through the linear driving rod 221. The slider 222 moves away from the micro switches and pushes the movement assembly 31 to rotate, so as to drive the indicating assembly 32 to rotate and indicate a gas pressure value. When the gas to be measured leaks, i.e., pressure of the gas to be measured drops, the measuring bellows 111 and the first pressure-bearing bellows 121 deform downward, the second connecting plate 212 drives the first connecting plate 211 to move downward as a whole, and drives the slider 222 to move downward through the linear driving rod 221. The slider 222 approaches the micro switches and triggers the micro switches to actuate, and pushes the movement assembly 31 to rotate, so as to drive the indicating assembly 32 to rotate and indicate a gas pressure value.

In the present disclosure, the driving mechanism 2 further includes a triggering assembly for triggering the alarm mechanism 7. The triggering assembly is disposed on the driving assembly 22. The driving assembly 22 can drive the triggering assembly to move so as to trigger the alarm mechanism 7 to actuate.

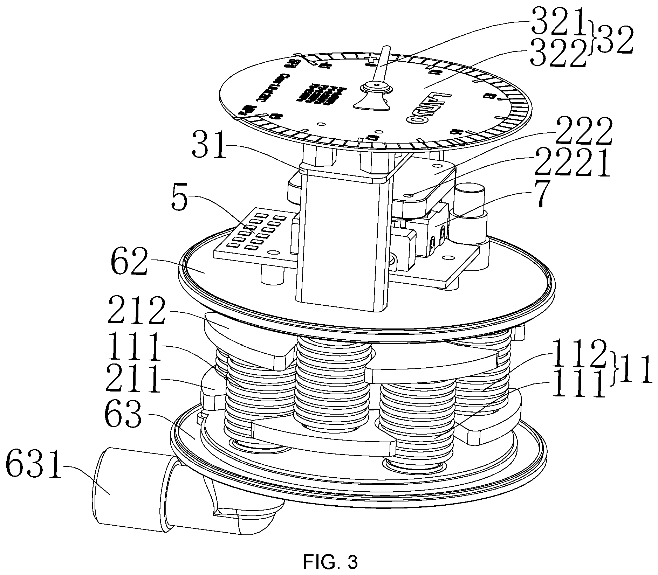

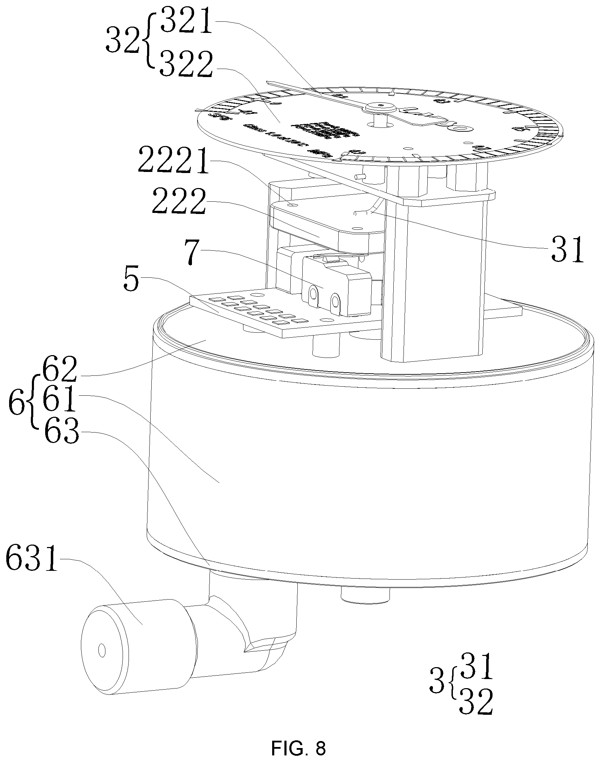

In the present disclosure, as shown in FIG. 3 and FIG. 8, adjustment through holes 2221 with the same number as the micro switches are formed in the slider 222. The triggering assembly is triggering screws disposed in the adjustment through holes 2221. The triggering screws pass through bottoms of the adjustment through holes 2221 and are used for triggering the micro switches. Distances of the triggering screws relative to the micro switches are adjusted by adjusting positions of the triggering screws in the adjustment through holes 2221, so as to realize alarm triggering at different pressure thresholds, thereby realizing a multi-stage alarm function.

In the present disclosure, as an example, the number of micro switches is four, which are respectively a first micro switch, a second micro switch, a third micro switch and a fourth micro switch. Four adjustment through holes 2221 are formed in the slider 222, and each of the adjustment through holes 2221 is provided with a corresponding triggering screw, and the triggering screws are a first triggering screw, a second triggering screw, a third triggering screw and a fourth triggering screw, respectively. Distances between the triggering screws and the corresponding micro switches are different. When pressure of the gas to be measured drops to a first preset pressure threshold, the first triggering screw moves to a position in contact with the first micro switch, triggers the first micro switch to actuate, and a switching signal sent by the first micro switch is transmitted to an external device through the circuit board 5. When pressure of the gas to be measured drops to a second preset pressure threshold, the second triggering screw moves to a position in contact with the second micro switch, triggers the second micro switch to actuate, and a switching signal sent by the second micro switch is transmitted to an external device through the circuit board 5. When pressure of the gas to be measured drops to a third preset pressure threshold, the third triggering screw moves to a position in contact with the third micro switch, triggers the third micro switch to actuate, and a switching signal sent by the third micro switch is transmitted to an external device through the circuit board 5. When pressure of the gas to be measured drops to a fourth preset pressure threshold, the fourth triggering screw moves to a position in contact with the fourth micro switch, triggers the fourth micro switch to actuate, and a switching signal sent by the fourth micro switch is transmitted to an external device through the circuit board 5. Accordingly, a segmented triggering effect of the parallel-type gas density relay is realized, and the parallel-type gas density relay can be applied to various occasions or various electrical equipment with high applicability.

In the present disclosure, the parallel-type gas density relay further includes a meter cover disposed on the upper cover 62. The circuit board 5, the alarm mechanism 7, the slider 222, the movement assembly 31 and the indicating assembly 32 are all disposed in the meter cover to prevent dust, moisture and other pollutants from entering the meter cover and ensure that the parallel-type gas density relay can work normally in a clean and dry environment.

In summary, the parallel-type gas density relay of the present disclosure has the following advantages:
(1) Expanded measurement range: when the monitored pressure range of the gas to be measured is large, shells of the compensating bellows 112 and shells of the second pressure-bearing bellows 122 share the pressure load together, so that the compensating bellows 112 and the second pressure-bearing bellows 122 deform within effective strokes. When the compensating pressure is high, shells of the measuring bellows 111 and shells of the first pressure-bearing bellows 121 share the pressure load together, so that the measuring bellows 111 and the first pressure-bearing bellows 121 deform within effective strokes, thereby expanding the measurement range of the parallel-type gas density relay and meeting gas pressure measurement requirements in a wider range.
(2) High-precision measurement: each of the pneumatic modules 11 still adopts a high-precision bellows structure, ensuring high-precision measurement within a wide measurement range.
(3) Temperature compensation: the compensating bellows 112 is filled with a compensating gas having the same characteristics as the gas to be measured and can automatically offset an influence of ambient temperature variations on measurement results. When temperature changes, deformations of the compensating bellows 112 and the measuring bellows 111 offset each other, ensuring that measurement results are free from temperature interference, enabling the parallel-type gas density relay to maintain stable measurement performance in environments with large temperature fluctuations.
(4) Multi-stage alarm function: the triggering screws pass through bottoms of the adjustment through holes 2221 and are used for triggering the micro switches. Distances of the triggering screws relative to the micro switches can be adjusted by adjusting positions of the triggering screws in the adjustment through holes 2221, so as to realize alarm triggering at different pressure thresholds, thereby realizing a multi-stage alarm function and meeting requirements of different application scenarios.
(5) Remote transmission of pressure signals: the circuit board 5 is electrically connected to the host computer 8 through the signal transmission line 9 to transmit a pressure signal of the gas to be measured to the host computer 8. The host computer 8 can determine whether the system has faults (such as gas leakage and abnormal pressure) by analyzing pressure signal variations, and an operator can remotely monitor gas pressure variations.
(6) Simple structure: the pneumatic modules 11 are connected in parallel with each other, the pressure-bearing modules 12 are connected in parallel with each other, the pneumatic modules are connected in parallel with the pressure-bearing modules 12, the measuring bellows 111 is connected with the compensating bellows 112 in a staggered manner in each of the pneumatic modules 11, and the first pressure-bearing bellows 121 is connected with the second pressure-bearing bellows 122 in a staggered manner in each of the pressure-bearing modules 12, making full use of space and realizing compact arrangement. The structure and process are simple, facilitating mass production.

In summary, the present disclosure effectively overcomes various drawbacks in the related art and has high industrial applicability.

The above embodiments are only illustrative of the principles and effects of the present disclosure and are not intended to limit the present disclosure. Any person skilled in the art can modify or change the above embodiments without departing from the spirit and scope of the present disclosure. Therefore, all equivalent modifications or changes made by those of ordinary skill in the art without departing from the spirit and technical ideas disclosed by the present disclosure shall be covered by the claims of the present disclosure.

## Claims

1. A parallel-type gas density relay for monitoring a pressure of a gas to be measured, comprising:
a pneumatic mechanism (1), the pneumatic mechanism (1) comprising one or more pneumatic modules (11) and one or more pressure-bearing modules (12); each of the pneumatic modules (11) being connected in parallel with each of the pressure-bearing modules (12), the pneumatic modules (11) being connected in parallel with each other, and the pressure-bearing modules (12) being connected in parallel with each other; each of the pneumatic modules (11) comprising a measuring bellows (111) with an open bottom end and a compensating bellows (112) hermetically sealed at both ends; a sealed chamber being disposed inside the compensating bellows (112), and the sealed chamber being filled with a compensating gas having the same characteristics as the gas to be measured; a measuring chamber being disposed inside the measuring bellows (111), the open bottom end of the measuring bellows (111) being in fluid communication with the gas to be measured so that the gas to be measured flows into the measuring chamber, and the measuring bellows (111) being connected with the compensating bellows (112) in a staggered manner; each of the pressure-bearing modules (12) comprising a first pressure-bearing bellows (121) hermetically sealed at both ends and a second pressure-bearing bellows (122) hermetically sealed at both ends, the first pressure-bearing bellows (121) being connected with the second pressure-bearing bellows (122) in a staggered manner, the first pressure-bearing bellows (121) being connected in parallel with the measuring bellows (111), and the second pressure-bearing bellows (122) being connected in parallel with the compensating bellows (112);
a driving mechanism (2), the driving mechanism (2) comprising a connecting assembly (21) and a driving assembly (22) disposed on the connecting assembly (21); the measuring bellows (111) being connected with the compensating bellows (112) in a staggered manner through the connecting assembly (21), and the first pressure-bearing bellows (121) being connected with the second pressure-bearing bellows (122) in a staggered manner through the connecting assembly (21); and
an indicating mechanism (3), the indicating mechanism (3) being connected with the driving assembly (22); when the pressure of the gas to be measured changes, the measuring bellows (111) and the first pressure-bearing bellows (121) deform and drive the driving assembly (22) to move through the connecting assembly (21), so as to push the indicating mechanism (3) to rotate and indicate a gas pressure value.

2. The parallel-type gas density relay according to claim 1, wherein the indicating mechanism (3) comprises a rotatable movement assembly (31) and an indicating assembly (32) rotatably connected with the movement assembly (31); the movement assembly (31) is disposed above the driving assembly (22) and in contact with a top of the driving assembly (22); the indicating assembly (32) comprises a pointer (321) and a dial (322) disposed between the movement assembly (31) and the pointer (321), and the pointer (321) is rotatably connected with the movement assembly (31).

3. The parallel-type gas density relay according to claim 1, further comprising a pressure signal acquisition module (4), the pressure signal acquisition module (4) being disposed in the measuring chamber of one of the measuring bellows to acquire a pressure signal of the gas to be measured.

4. The parallel-type gas density relay according to claim 3, further comprising a circuit board (5), the circuit board (5) being electrically connected with the pressure signal acquisition module (4) to transmit the pressure signal acquired by the pressure signal acquisition module (4) to an external device.

5. The parallel-type gas density relay according to claim 1, wherein the connecting assembly (21) comprises a first connecting plate (211), a second connecting plate (212) disposed in parallel with the first connecting plate (211), and a support tube (213) for connecting the first connecting plate (211) and the second connecting plate (212); a bottom end of the compensating bellows (112) is connected with the first connecting plate (211), a top end of the measuring bellows (111) is connected with the second connecting plate (212), a top end of the first pressure-bearing bellows (121) is connected with the second connecting plate (212), and a bottom end of the second pressure-bearing bellows (122) is connected with the first connecting plate (211); the first connecting plate (211) is disposed higher than bottom ends of the measuring bellows (111) and the first pressure-bearing bellows (121), and the second connecting plate (212) is disposed lower than top ends of the compensating bellows (112) and the second pressure-bearing bellows (122), so that the measuring bellows (111) and the compensating bellows (112) are staggered in a height direction, and the first pressure-bearing bellows (121) and the second pressure-bearing bellows (122) are staggered in the height direction.

6. The parallel-type gas density relay according to claim 2, further comprising a housing structure (6), the housing structure (6) comprising a housing (61), an upper cover (62) disposed on a top of the housing (61), and a lower cover (63) disposed at a bottom of the housing (61); the pneumatic mechanism (1) and the connecting assembly (21) are both disposed in an accommodating cavity jointly defined by the housing (61), the upper cover (62) and the lower cover (63); a gas nozzle (631) for being in fluid communication with the gas to be measured is disposed at a bottom of the lower cover (63); the open bottom ends of the measuring bellows (111) in the pneumatic modules (11) respectively are in fluid communication with the gas nozzle (631), and bottom ends of the first pressure-bearing bellows (121) in the pressure-bearing modules (12) are respectively connected with the lower cover (63); top ends of the compensating bellows (112) in the pneumatic modules (11) are respectively fixedly connected with the upper cover (62), and top ends of the second pressure-bearing bellows (122) in the pressure-bearing modules (12) are respectively fixedly connected with the upper cover (62), so that the pneumatic modules (11) are connected in parallel with each other, the pressure-bearing modules (12) are connected in parallel with the pneumatic modules (11), and the pressure-bearing modules (12) are connected in parallel with each other.

7. The parallel-type gas density relay according to claim 6, wherein the driving assembly (22) comprises a linear driving rod (221) and a slider (222); a first end of the linear driving rod (221) is connected with the connecting assembly (21), and a second end of the linear driving rod (221) is connected with the slider (222); the movement assembly (31) is disposed above the slider (222) and in contact with a top of the slider (222).

8. The parallel-type gas density relay according to claim 7, wherein a first through hole is formed in the upper cover (62); the first end of the linear driving rod (221) passes through the first through hole and is connected with the connecting assembly (21), and is movable up and down in the first through hole, and the second end of the linear driving rod (221) is connected with the slider (222).

9. The parallel-type gas density relay according to claim 7, further comprising an alarm mechanism (7), the alarm mechanism (7) being disposed below the slider (222) and located on a moving path of the slider (222); when the pressure of the gas to be measured changes, the measuring bellows (111) and the first pressure-bearing bellows (121) deform and drive the slider (222) to move in a direction away from or close to the alarm mechanism (7) through the connecting assembly (21).

10. The parallel-type gas density relay according to claim 9, wherein the driving mechanism (2) further comprises a triggering assembly for triggering the alarm mechanism (7), the triggering assembly being disposed on the driving assembly (22); the driving assembly (22) drives the triggering assembly to move, so as to trigger the alarm mechanism (7) to operate.
